# EUROPEAN PATENT APPLICATION

(11) **EP 2 477 151 A2**
(43) Date of publication of application: **18.07.2012**
(21) Application number: 10813990.8
(22) Date of filing: 07.09.2010
(51) Int. Cl.: G06Q 50/00

(54) **METHOD FOR OPERATING A PREPAID TAXI SERVICE**

(30) Priority: 07.09.2009 KR 20090083861
(71) Applicant: Kim, Dong Soo, Gimpo-si, Gyeonggi-do 415-764 (KR)
(72) Inventor: KIM, Kwang Woo, Seoul 157-924 (KR); KIM, Seung Hyun, Seoul 157-223 (KR); PARK, Hyung Soo, Seoul 157-030 (KR); SUNG, Seung Myun, Seoul 158-055 (KR); LEE, Nam Eok, Seoul 157-010 (KR); CHOI, Jung Soo, Gimpo-si Gyeonggi-do 415-070 (KR)
(74) Representative: TER MEER - STEINMEISTER & PARTNER GbR
(86) International application number: PCT/KR2010/006076
(87) International publication number: WO 2011/028081

(57) **Abstract**

The present invention relates to a method for operating a prepaid taxi service. The method for operating a prepaid taxi is performed by a prepaid taxi management server connected to a reserving user personal computer (PC), an Internet payment system, and a taxi driving system over an Internet-based network. The method includes (a) receiving an origin and a destination searched for and selected by a reserving passenger who desires to use a prepaid taxi, (b) searching for and providing an optimal route by searching for routes between the origin and the destination, and calculating a travel distance along the optimal route, (c) calculating a taxi fare based on the calculated travel distance, and (d) receiving payment of the taxi fare calculated at (c) in conjunction with the Internet payment system.

## Description

### Technical Field

The present invention relates, in general, to a method for operating a prepaid taxi service and, more particularly, to a method for operating a prepaid taxi, in which an Internet-based system is constructed to pay for and reserve a prepaid taxi and which is configured such that if the origin and the destination of the prepaid taxi are selected, an optimal route between the selected origin and destination is selected, and the fare of the prepaid taxi is automatically calculated and payment thereof is processed based on a taxi fare, which is obtained by adding a distance-based fare obtained by multiplying a fare per unit distance by a travel distance to a separately stored base fare, in connection with an Internet payment system, and such that a transportation service can be accurately provided to a customer who made a reservation at the time appointed for the use of the prepaid taxi.

### Background Art

Payments for all transportation means are performed in a prepaid way based on travel distances, or a fixed way in which an origin and a destination are fixed and fares are fixed, so that altercations or social problems about the calculation of fares do not occur.

However, in the case of taxies, a deferred payment system is configured such that an origin and a destination are not fixed, and a fare is automatically calculated using an internal device according to the travel distance, calculated by a distance measurement device attached to a vehicle, and then a user pays the fare by cash or by a credit card payment means attached to the vehicle.

Accordingly, a problem arises in that taxi drivers may directly overcharge taxi users, or may indirectly overcharge them by selecting a roundabout way depending on taxi users, and in particular, when strangers or foreigners take a taxi at an airport or the like, thus resulting in social or national problems such as causing altercations between drivers and users.

### Disclosure

### Technical Problem

Accordingly, the present invention has been made keeping in mind the above problems occurring in the prior art, and an object of the present invention is to provide a method of operating a prepaid taxi, which automatically calculates a distance and a fare and allows the payment of the fare to be received in accordance with a reservation or before a vehicle departs, and subsequently provides a taxi transportation service at the time appointed for the use of the service, without using a system that calculates a fare on the basis of a measured distance and allows the payment of the fare to be received after the travel of a taxi has finished.

### Technical Solution

In order to accomplish the above object, the present invention provides a method for operating a prepaid taxi, the method being performed by a prepaid taxi management server connected to a reserving user personal computer (PC), an Internet payment system, and a taxi driving system over an Internet-based network, including (a) receiving an origin and a destination searched for and selected by a reserving passenger who desires to use a prepaid taxi; (b) searching for and providing an optimal route by searching for routes between the origin and the destination, and calculating a travel distance along the optimal route; (c) calculating a taxi fare based on the calculated travel distance; and (d) receiving payment of the taxi fare calculated at (c) in conjunction with the Internet payment system.

In this case, the method of operating the prepaid taxi according to the present invention may further include (e) providing a taxi transportation service to the reserving passenger who paid the taxi fare of the prepaid taxi.

Preferably, (b) may be configured to provide an optimal route into which traffic flow information stored in a database based on time appointed for use of the prepaid taxi is incorporated. Preferably, the optimal route into which the traffic flow information stored in the database is incorporated may be configured to further incorporate pre-stored average travel times required to travel along the selected optimal route for each month, each day, each day of a week, and each time span, and the average travel times may be additionally calculated upon calculating the taxi fare.

Preferably, (b) may further include performing toll road selection by allowing the passenger who uses the prepaid taxi to select a toll road if the toll road is present among routes searched for when the optimal route is provided, wherein if the toll road is selected, a toll of the toll road is further added to the taxi fare, and if the toll road is not selected, a route of city streets that detour around the toll road is provided.

Preferably, (b) may include (b-1) searching for routes between the origin and the destination and providing one or more routes to the passenger who uses the prepaid taxi; (b-2) receiving a single route selected by the passenger who uses the prepaid taxi from among the one or more routes; and (b-3) calculating a travel distance along the route selected by the passenger who uses the prepaid taxi.

In this case, the one or more routes at (b-1) may be routes based on any one selected from a group consisting of a shortest travel distance between the origin and the destination, a distance in a shortest time between the origin and the destination, a travel distance into which traffic flow information stored based on the time appointed for use of the prepaid taxi is incorporated, and a travel distance including a toll road.

Preferably, the taxi fare calculated at (c) may be obtained by adding a distance fare based on the calculated travel distance to a base fare for the use of the prepaid taxi, and an additional service fare, including presence or absence of a toll road selected by the passenger who uses the prepaid taxi, a class of a taxi vehicle, and a level of a driver, may be further incorporated into the taxi fare.

Preferably, (d) may include if the passenger who uses the prepaid taxi completes payment of the taxi fare, generating code information required to recognize the passenger who uses the prepaid taxi, and providing the code information.

Preferably, (e) may include (e-1) receiving, by the taxi driving system that is connected to the prepaid taxi management server in a wireless manner, code information from a passenger who takes the prepaid taxi to use the prepaid taxi; (e-2) searching for, by the taxi driving system, data related to the code information of the reserving passenger; and (e-3) displaying, by the taxi driving system, a travel route searched for using code information of the reserving passenger via a navigation device, wherein a driver of the prepaid taxi drives the prepaid taxi to guide the passenger who takes the prepaid taxi to a destination targeted by the passenger along the displayed travel route, thus completing the transportation service.

Preferably, the code information may be one of personal information about the passenger who reserved the use of the prepaid taxi and usage information of the customer that is randomly extracted by the prepaid taxi management server upon completing the payment.

Preferably, the prepaid taxi at (e-1) may be either a prepaid taxi that is located in a relevant area and that is called by the prepaid taxi management server at a time appointed for use by the passenger who desires to use the prepaid taxi, or any prepaid taxi which is taken by the passenger who desires to use the prepaid taxi.

### Advantageous Effects

As described above, in accordance with the method of operating a prepaid taxi according to the present invention, there is provided a method of automatically calculating a fare and providing a payment method to operate a prepaid taxi so that the problem of altercations over charging a fare and social or national problems caused by overcharging occurring in the operation of the conventional deferred payment taxi can be minimized. Accordingly, there are advantages in that the problems of charging-related altercations and overcharging occurring in such a way that a taxi driver drives along a roundabout way when strangers or foreigners take a taxi can be fundamentally solved.

### Description of Drawings

FIG. 1 is a diagram showing the configuration of a system to which a method of operating a prepaid taxi according to an embodiment of the present invention is applied by way of example;
FIG. 2 is a functional block diagram showing a prepaid taxi management server according to the present invention;
FIG. 3 is an operation flowchart showing a method of operating a prepaid taxi according to an embodiment of the present invention;
FIG. 4 is an operation flowchart showing the route search and travel distance calculation step S20 of the prepaid taxi operation method according to the present invention; and
FIG. 5 is an operation flowchart showing the prepaid taxi transportation service step S50 of the prepaid taxi operation method according to the present invention.

### Best Mode

Hereinafter, preferred embodiments of the present invention will be described in detail with reference to the attached drawings. In the specification, detailed descriptions of well-known functions or configurations may unnecessarily make the gist of the present invention obscure, the detailed descriptions will be omitted.

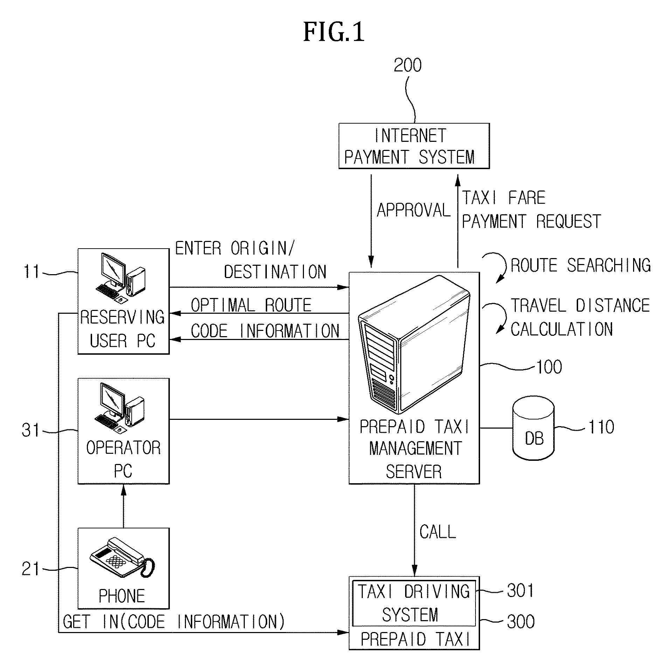

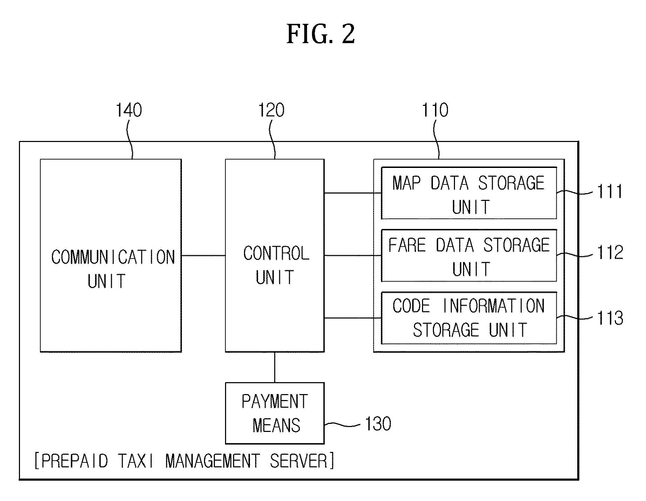

FIG. 1 is a diagram showing the configuration of a system to which a method of operating a prepaid taxi according to an embodiment of the present invention is applied by way of example, and FIG. 2 is a functional block diagram showing a prepaid taxi management server according to the present invention.

As shown in the drawings, the system to which the method of operating a prepaid taxi according to an embodiment of the present invention is applied by way of example includes a reserving user personal computer (PC) 11, a phone 21, an operator PC 31, a prepaid taxi management server 100 having a database (DB) 110, an Internet payment system 200, and a prepaid taxi 300 having a taxi driving system 301.

The reserving user PC 11 is a terminal for an Internet reserving user, which is used when a customer who desires to use a prepaid taxi directly accesses the Internet. The phone 21 is a terminal used when a customer who desires to uses a prepaid taxi makes a reservation by phone. The operator PC 31 is a terminal used when a customer who desires to use a prepaid taxi makes a reservation via a manager in charge of reservations.

That is, the customer who desires to use a prepaid taxi can conveniently reserve the use of the prepaid taxi by using one of the reserving user PC 11, the phone 21, and the operator PC 31.

The prepaid taxi management server 100 processes the reservation of a prepaid taxi, the searching for routes, the calculation of a travel distance, and the payment of a fare, via an Internet-based network connection to the reserving user PC 11, the operator PC 31, and the Internet payment system 200, and provides a taxi transportation service to a reserving customer who reserved the prepaid taxi by calling the taxi driving system 301 of the prepaid taxi 300 via wireless Internet access.

Here, as shown in FIG. 2, the prepaid taxi management server 100 includes the DB 110 having a map data storage unit 111, a fare data storage unit 112, and a code information storage unit 113, a control unit 120, a payment means 130, and a communication unit 140.

The map data storage unit 111 stores routes and travel distances, which are selected based on origins and destinations selected by customers who desire to use the prepaid taxi, for respective customers, the fare data storage unit 112 stores taxi fares which are calculated based on the travel distances selected by customers who desire to use the prepaid taxi, and the code information storage unit 113 stores information required to recognize customers who reserved the use of the prepaid taxi.

Preferably, pieces of information about reserving customers respectively stored in the map data storage unit 111, the fare data storage unit 112, and the code information storage unit 113 are mapped to one another so that they can be processed in connection with one another under the management of the control unit 120.

The control unit 120 is the main operating system of the prepaid taxi management server 100 and is configured to control the function of searching for routes based on origins and destinations entered by customers who desire to use the prepaid taxi, the function of providing an optimal route, the function of calculating a travel distance along a selected route, the function of processing the payment of a taxi fare, the function of generating code information, and the function of calling the prepaid taxi 300 depending on times appointed for the use of the prepaid taxi 300.

The payment means 130 processes the payment by requesting a customer who requested the use of the prepaid taxi to pay a taxi fare in conjunction with the Internet payment system 200 and by obtaining approval of payment, under the management of the control unit 120.

The communication unit 140 functions to provide wired or wireless Internet access to the reserving user PC 11, the operator PC 31, the Internet payment system 200, and the taxi driving system 301 of the prepaid taxi 300.

The Internet payment system 200 is a system managed by either a financial institution for approving the payment of a taxi fare depending on the use of the prepaid taxi, or a payment agency.

The taxi driving system 301 is a system mounted on the prepaid taxi 300, and is configured to perform data communication to provide a transportation service to the customer who reserved the prepaid taxi in the state in which the taxi driving system 301 is connected to the prepaid taxi management server 100 over the wireless Internet.

The method of operating the prepaid taxi according to an embodiment of the present invention will be described in detail with reference to the attached drawings on the basis of the prepaid taxi operating system having the above configuration.

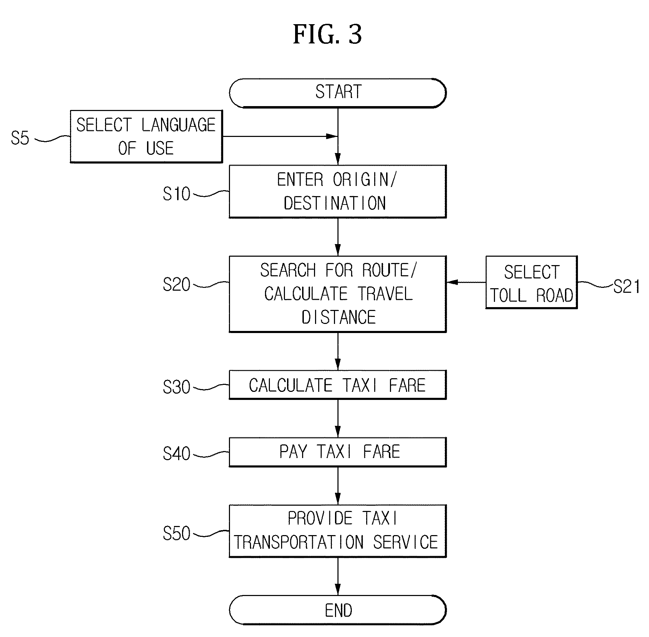

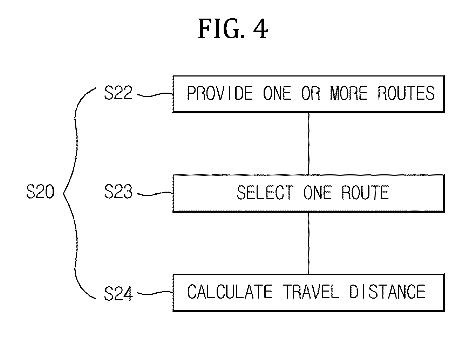

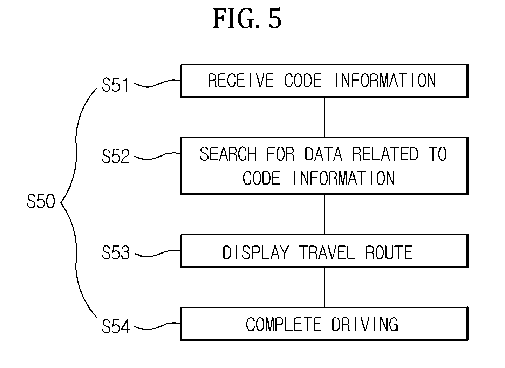

FIG. 3 is an operation flowchart showing a method of operating a prepaid taxi according to an embodiment of the present invention, FIG. 4 is an operation flowchart showing the route search and travel distance calculation step S20 of the prepaid taxi operating method according to the present invention, and FIG. 5 is an operation flowchart showing the prepaid taxi transportation service step S50 of the prepaid taxi operation method according to the present invention.

First, the prepaid taxi management server 100 receives an origin and a destination, which are searched for and selected by a reserving passenger who desires to use the prepaid taxi 300 using any one of the reserving user PC 11, the phone 21 and the operator PC 31 at step S10.

In this case, when a customer who desires to use the prepaid taxi 300 is a foreigner, the process is inducted to proceed to step S5 of selecting a desired language to be used before an origin and a destination are entered.

Next, the prepaid taxi management server 100 searches for and provides an optimal route by searching routes between the entered origin and destination, and then calculates a travel distance based on the optimal route at step S20.

In this case, at step S20, an optimal route, into which traffic flow information stored in the DB based on the time appointed for the use of the prepaid taxi 300 is incorporated, is provided.

The optimal route into which the traffic flow information stored in the DB is incorporated is configured to further incorporate average travel times that have been previously stored and are required to travel along the selected optimal route for each month, each day, each day of a week, and each time span. When such a pre-stored average travel time is incorporated into the calculation of a taxi fare, all passengers who use the prepaid taxi 300 have the advantage of canceling an increment in the taxi fare, caused by an increase and a decrease in travel time due to an inevitable delay or traffic jam, on average. In the case of the driver of the prepaid taxi 300, since even an average time calculated based on statistical data is taken into consideration in a taxi fare calculated using only the travel distance, he or she can more reasonably charge the fare and can reasonably receive compensation for his or her labor. When such pre-stored average travel time is not used, there is an inconvenience in that a taxi fare over time must be additionally required when arriving at the final destination, and in that, from the standpoint of a passenger, a burden of the fare is increased because an additional amount is unexpectedly imposed on the fare regarded as having already been completely paid. Accordingly, a distance-time cooperative billing system based on pre-stored data as in the case of the present invention has significance in itself.

Furthermore, since the passenger who uses the prepaid taxi 300 pays the fare based on the average travel time, the passenger does not need to pay a separate additional fare even if travel time increases. Since the driver of the prepaid taxi 300 is also paid the fare based on the average travel time, there is an advantage in that losses and gains caused by an increment and a decrement in the travel time may be averaged and cancelled.

In this case, as methods of reducing differences between the pre-stored average travel time and the actual travel time, a method of giving a partial discount off the previously calculated fare to the passenger upon performing payment and a method of additionally compensating the driver when the driver suffers a great loss due to the above differences may be taken into consideration.

Further, at step S20, if there is a toll road among roads searched for when the optimal route is provided, a toll road selection step S21 may be further provided to allow the passenger who uses the prepaid taxi 300 to select the toll road. In this case, if the toll road is selected, the toll of the toll road is further added to the taxi fare, whereas if a toll road is not selected, a route based on streets that detour around the toll road is provided.

FIG. 4 is a diagram showing an example in which the customer who uses the prepaid taxi 300 personally selects an optimal route.

First, the prepaid taxi management server 100 searches for routes between an origin and a destination that are entered, and then provides one or more of the routes to the passenger who uses the prepaid taxi 300 at step S22.

In this case, the one or more routes provided at step S22 may correspond to routes based on any one travel distance selected from a group consisting of the shortest travel distance between the origin and the destination, a distance in the shortest time between the origin and the destination, a travel distance into which traffic flow information stored based on the time appointed for the use of the prepaid taxi 300 is incorporated, and a travel distance including a toll road. The customer who desires to use the prepaid taxi 300 can suitably select one of the above-described various travel routes in conformity with his or her purpose of travel.

That is, the customer who desires to use the prepaid taxi 300 can select a parameter such as time, distance, or taxi fare in conformity with his or her purpose of travel, and the traffic flow information incorporates traffic conditions that have been previously stored for each month, each day, each day of a week, and each time span.

Next, the prepaid taxi management server 100 receives one route that is personally selected by the passenger who uses the prepaid taxi 300 from among the one or more routes provided to the passenger at step S23.

Thereafter, the prepaid taxi management server 100 calculates a travel distance along the route selected by the passenger who uses the prepaid taxi 300 at step S23.

Next, the prepaid taxi management server 100 calculates a taxi fare based on the calculated travel distance at step S30.

Here, the taxi fare calculated at step S30 is obtained by adding a base fare based on the use of the prepaid taxi 300 to a distance fare based on the calculated travel distance. When there is an additional service fare including the presence or absence of a toll road selected by the customer who uses the prepaid taxi 300, the class of the taxi vehicle, and the level of the driver, the service fare is incorporated into the taxi fare.

In this case, the additional service fare may include a toll of a toll road, a fare based on the class of the taxi vehicle such as a full-sized vehicle or a medium-sized vehicle, and a fare into which a driver's level based on the selection of a specific foreign language is incorporated, and in addition, may further include a fare based on the use of the Internet or the use of a mobile phone which can be additionally accessed in the prepaid taxi 300.

Typically, the taxi fare is obtained such that an integrated fare in which distance and travel time are reflected in the base fare is determined to be a final taxi fare, so that it is preferably understood that the statistical travel time relative to the travel distance is reflected in the distance fare of the present invention.

Next, the prepaid taxi management server 100 receives the payment of the taxi fare calculated at step S30 in conjunction with the Internet payment system 200 at step S40.

In this case, step S40 may further include the step of, when the customer who uses the prepaid taxi 300 completely pays the taxi fare, generating code information required to recognize the customer who uses the prepaid taxi 300 and providing the code information.

Next, the prepaid taxi management server 100 provides a taxi transportation service to the passenger who paid the fare for the prepaid taxi 300 at step S50.

In this case, at the taxi transportation service step S50, as shown in FIG. 5, the taxi driving system 301 connected in a wireless manner to the prepaid taxi management server 100 receives code information from the passenger who takes the prepaid taxi 300 so as to use the prepaid taxi 300 at step S51.

Here, the code information may preferably be any one of personal information about the customer who reserved the use of the prepaid taxi 300 and usage information of the customer that is randomly extracted by the prepaid taxi management server 100 upon completing the payment. Such code information is not especially limited, and any information such as the name of the passenger using the taxi or numbers extracted from the server may be used.

Further, at step S51, the prepaid taxi 300 may be either a prepaid taxi 300 that is present in a relevant area and that is randomly called by the prepaid taxi management server 100 at the time appointed for the use by the passenger who desires to use the prepaid taxi 300, or a prepaid taxi 300 that is randomly taken by the passenger who desires to use the prepaid taxi 300.

That is, the customer who desires to use the prepaid taxi 300 is either provided with the prepaid taxi 300 via a call service, or can take the prepaid taxi 300 at any place and can be then provided with the transportation service by providing code information.

Next, the taxi driving system 301 searches for data related to the code information of the reserving passenger at step S52.

Next, the taxi driving system 301 displays a travel route searched for using the code information of the reserving passenger via a navigation device at step S53.

Next, the driver of the prepaid taxi 300 drives along the displayed travel route to guide the passenger to his or her destination, thus completing the transportation service at step S54.

As described above, the prepaid taxi 300 used in the above-described prepaid taxi operation method according to the embodiment of the present invention is preferably based on a specific taxi aimed at guiding a customer from a fixed place such as an airport or a harbor to a destination desired by the customer, rather than a taxi freely driving down the street.

Although the preferred embodiments specifying the present invention have been illustrated and described, those skilled in the art will appreciate that the present invention is not limited to these embodiments and the present invention can be changed and modified in various forms without departing from the scope and spirit of the invention.

## Claims

1. A method of operating a prepaid taxi, the method being performed by a prepaid taxi management server connected to a reserving user personal computer (PC), an Internet payment system, and a taxi driving system over an Internet-based network, comprising:
(a) receiving an origin and a destination searched for and selected by a reserving passenger who desires to use a prepaid taxi;
(b) searching for and providing an optimal route by searching for routes between the origin and the destination, and calculating a travel distance along the optimal route;
(c) calculating a taxi fare based on the calculated travel distance; and
(d) receiving payment of the taxi fare calculated at (c) in conjunction with the Internet payment system.

2. The method according to claim 1, further comprising:
(e) providing a taxi transportation service to the reserving passenger who paid the taxi fare of the prepaid taxi.

3. The method according to claim 1, wherein (b) is configured to provide an optimal route into which traffic flow information stored in a database based on time appointed for use of the prepaid taxi is incorporated.

4. The method according to claim 3, wherein the optimal route into which the traffic flow information stored in the database is incorporated is configured to further incorporate pre-stored average travel times required to travel along the selected optimal route for each month, each day, each day of a week, and each time span, and the average travel times are additionally calculated upon calculating the taxi fare.

5. The method according to claim 4, wherein (b) further comprises performing toll road selection by allowing the passenger who uses the prepaid taxi to select a toll road if the toll road is present among routes searched for when the optimal route is provided,
wherein if the toll road is selected, a toll of the toll road is further added to the taxi fare, and if the toll road is not selected, a route of city streets that detour around the toll road is provided.

6. The method according to claim 1, wherein (b) comprises:
(b-1) searching for routes between the origin and the destination and providing one or more routes to the passenger who uses the prepaid taxi;
(b-2) receiving a single route selected by the passenger who uses the prepaid taxi from among the one or more routes; and
(b-3) calculating a travel distance along the route selected by the passenger who uses the prepaid taxi.

7. The method according to claim 6, wherein the one or more routes at (b-1) are routes based on any one selected from a group consisting of a shortest travel distance between the origin and the destination, a distance in a shortest time between the origin and the destination, a travel distance into which traffic flow information stored based on the time appointed for use of the prepaid taxi is incorporated, and a travel distance including a toll road.

8. The method according to claim 1, wherein:
the taxi fare calculated at (c) is obtained by adding a distance fare based on the calculated travel distance to a base fare for the use of the prepaid taxi, and
an additional service fare, including presence or absence of a toll road selected by the passenger who uses the prepaid taxi, a class of a taxi vehicle, and a level of a driver, is further incorporated into the taxi fare.

9. The method according to claim 1, wherein (d) comprises:
if the passenger who uses the prepaid taxi completes payment of the taxi fare, generating code information required to recognize the passenger who uses the prepaid taxi, and providing the code information.

10. The method according to claim 2, wherein (e) comprises:
(e-1) receiving, by the taxi driving system that is connected to the prepaid taxi management server in a wireless manner, code information from a passenger who takes the prepaid taxi to use the prepaid taxi;
(e-2) searching for, by the taxi driving system, data related to the code information of the reserving passenger; and
(e-3) displaying, by the taxi driving system, a travel route searched for using code information of the reserving passenger via a navigation device,
wherein a driver of the prepaid taxi drives the prepaid taxi to guide the passenger who takes the prepaid taxi to a destination targeted by the passenger along the displayed travel route, thus completing the transportation service.

11. The method according to claim 10, wherein the code information is one of personal information about the passenger who reserved the use of the prepaid taxi and usage information of the customer that is randomly extracted by the prepaid taxi management server upon completing the payment.

12. The method according to claim 10, wherein the prepaid taxi at (e-1) is a prepaid taxi that is located in a relevant area and that is called by the prepaid taxi management server at a time appointed for use by the passenger who desires to use the prepaid taxi.

13. The method according to claim 10, wherein the prepaid taxi at (e-1) is any prepaid taxi which is taken by the passenger who desires to use the prepaid taxi.
